# EUROPEAN PATENT SPECIFICATION

(11) **EP 4 181 160 B1**
(45) Date of publication and mention of the grant of the patent: **27.08.2025**
(21) Application number: 22207274.6
(22) Date of filing: 14.11.2022
(51) Int. Cl.: H01F 27/28, H01F 27/32

(54) **TRANSFORMER AND POWER EQUIPMENT**
TRANSFORMATOR UND LEISTUNGSAUSRÜSTUNG
TRANSFORMATEUR ET ÉQUIPEMENT DE PUISSANCE

(30) Priority: 16.11.2021 CN 202111351633
(43) Date of publication of application: 17.05.2023
(73) Proprietor: Huawei Digital Power Technologies Co., Ltd., Shenzhen, 518043 (CN)
(72) Inventor: ZHANG, Zelong, Shenzhen, 518043 (CN); HUANG, Zhuyong, Shenzhen, 518043 (CN); HU, Xiaoqing, Shenzhen, 518043 (CN); ZHANG, Qunyou, Shenzhen, 518043 (CN); ZHAO, Wen, Shenzhen, 518043 (CN)
(74) Representative: Gill Jennings & Every LLP

(56) References cited:
- EP-A1- 3 144 944
- CN-U- 209 804 426
- US-A- 4 009 306

## Description

### TECHNICAL FIELD

This application relates to the field of power equipment technologies, and in particular, to a transformer and power equipment.

### BACKGROUND

There is an electric difference between a high-voltage component (such as a high-voltage coil), a low-voltage component (such as a low-voltage coil), and a magnetic core that are disposed inside a transformer. Therefore, different electric field strength exists at different insulation positions. When partial field strength is too high, a relatively large partial discharge is caused. Therefore, insulation reliability is affected, and finally device insulation fails during long-term operation. To meet an insulation requirement between the high-voltage component, the low-voltage component, and the magnetic core, a solid insulation material is usually filled between and outside the high-voltage coil and the low-voltage coil in a solid insulation manner. Because the insulation material is wrapped around the high-voltage coil and the low-voltage coil, it is difficult for the high-voltage coil and the low-voltage coil to dissipate heat, affecting lives of the high-voltage coil and the low-voltage coil.

CN209804426U relates to high-voltage transformer and power electronic device. EP3144944A1 relates to electrical winding, dry transformer with such an electrical winding, and method for production of an electrical winding. US4009306A relates to encapsulation method.

### SUMMARY

This application provides a transformer and power equipment. The transformer can effectively improve insulation reliability and reduce a partial discharge amount of the transformer, to facilitate heat dissipation of a high-voltage coil, a low-voltage coil, and a magnetic core while meeting insulation requirements of the high-voltage coil and the low-voltage coil, thereby prolonging service lives of the high-voltage coil and the low-voltage coil.

The invention has been defined in the independent claims. Further specific technical features have been defined in the dependent claims.

A first aspect of this application provides a transformer. The transformer includes:
a low-voltage coil;
a high-voltage coil;
a magnetic core, where at least a part of the magnetic core is penetrated through the low-voltage coil and the high-voltage coil; and
an insulation member, where the insulation member is wrapped around the high-voltage coil to insulate the high-voltage coil from the low-voltage coil and the magnetic core, and a ground plane is disposed on at least a part of an outer surface of the insulation member.

A voltage uniform layer is disposed between the high-voltage coil and the insulation member, the voltage uniform layer is wrapped around the high-voltage coil, and the voltage uniform layer is electrically connected to one end of the high-voltage coil.

In this application, the insulation member is wrapped around only the high-voltage coil. Therefore, heat dissipation of the low-voltage coil and the magnetic core can be facilitated while the high-voltage coil is insulated from the low-voltage coil and the magnetic core, to reduce a risk that the low-voltage coil and the magnetic core are damaged due to poor heat dissipation of the low-voltage coil and the magnetic core, thereby prolonging a service life of the transformer. In addition, installation and maintenance of the low-voltage coil and the magnetic core can be facilitated, thereby reducing processing and maintenance costs of the transformer. The voltage uniform layer and the ground plane are used, so that a problem that partial field strength between a high voltage and a low voltage of the transformer is excessively high can be effectively resolved, to reduce a partial discharge, thereby improving long-term insulation reliability.

In a possible design, the insulation member is wrapped around the high-voltage coil through casting.

In this application, the insulation member is wrapped around the high-voltage coil through casting, so that a connection manner between the insulation member and the high-voltage coil can be simplified, thereby reducing production costs of the high-voltage coil and the insulation member. In addition, connection stability between the high-voltage coil and the insulation member can be improved, to reduce a risk that the high-voltage coil moves relative to the insulator, thereby improving working stability and use safety of the transformer.

In a possible design, the high-voltage coil includes a coil body, a cable outlet portion, and a connection terminal. One end of the cable outlet portion is connected to the coil body, and the other end is connected to the connection terminal. The insulation member is wrapped around the coil body and the cable outlet portion, and at least a part of the connection terminal is exposed by being penetrated through the insulation member.

In this application, a creepage distance M1 exists between an end that is of the ground plane and that is close to the connection terminal and the connection terminal, and an electrical clearance H1 exists between the end that is of the ground plane and that is close to the connection terminal and the connection terminal. The insulation member is wrapped around the coil body and the cable outlet portion and wrapped around a part of the connection terminal, so that the creepage distance M1 and the electrical clearance H1 can be increased, to reduce a risk that air on the periphery of the insulation member is broken down by a strong electric field, thereby further improving use safety of the transformer.

In a possible design, a creepage distance M2 exists between an end that is of the low-voltage coil and that is close to the connection terminal and the connection terminal, an electrical clearance H2 exists between the end that is of the low-voltage coil and that is close to the connection terminal and the connection terminal, M2>M1, and H2>H1.

A creepage distance M3 exists between an end that is of the magnetic core and that is close to the connection terminal and the connection terminal, an electrical clearance H3 exists between the end that is of the magnetic core and that is close to the connection terminal and the connection terminal, M3>M1, and H3>H1.

In this application, M2>M1, and M3>M1, so that a length of the ground plane is greater than a length of the low-voltage coil and a length of the magnetic core. Therefore, a risk that the air is broken down by a strong electric field can be reduced, thereby improving use safety of the transformer and extending a service life of the transformer. H2>H1, and H3>H1, that is, in a thickness direction of the high-voltage coil, a distance between the low-voltage coil and the connection terminal is less than a distance between the ground plane and the connection terminal, and a distance between the magnetic core and the connection terminal is less than the distance between the ground plane and the connection terminal, so that installation of the high-voltage coil, the low-voltage coil, and the magnetic core can be facilitated, to simplify a structure of the transformer, thereby reducing production costs of the transformer.

In a possible design, the insulation member includes a body portion and an extension portion, the body portion is wrapped around the coil body, and the extension portion is wrapped around the cable outlet portion and the part of the connection terminal. The extension portion has a first end connected to the body portion, and a thickness of the first end is greater than a thickness of the body portion.

In this application, the thickness of the first end of the insulation member is greater than the thickness of the body portion, so that a risk that air outside the first end is broken down by a strong electric field can be reduced, thereby improving use safety of the transformer.

In a possible design, the body portion is connected to the extension portion by using a transition portion, the transition portion is arc-shaped, and a cross-sectional area of the transition portion increases in a direction from the body portion to the extension portion. The ground plane is wrapped around the transition portion.

In this application, the body portion is connected to the extension portion by using the arc-shaped transition portion, that is, a shape of the transition portion is close to a shape of an electric field line, so that a size of the insulation member is reduced while a risk that the air is broken down by an end electric field is reduced, thereby reducing production costs of the insulation member. The ground plane is wrapped around an outer surface of the transition portion, so that a risk that air outside the transition portion is broken down by an electric field can be reduced, thereby further improving use safety of the transformer.

In this application, the voltage uniform layer is disposed between the high-voltage coil and the insulation member, to balance electric potentials on a surface of the high-voltage coil by using the voltage uniform layer, so that a uniform and stable electric field is generated between the high-voltage coil and the low-voltage coil, to reduce a risk that air between the high-voltage coil and the low-voltage coil is broken down, thereby improving use safety of the transformer.

In a possible design, a first installation hole is disposed in the low-voltage coil, a second installation hole is disposed in the insulation member, and at least a part of the magnetic core is penetrated through the first installation hole and the second installation hole and penetrated through the high-voltage coil.

In this application, at least the part of the magnetic core is penetrated through the first installation hole and the second installation hole, so that installation of the magnetic core can be facilitated, to simplify an installation structure of the magnetic core, thereby reducing production costs of the transformer.

In a possible design, the high-voltage coil includes one coil body or a plurality of coil bodies connected to each other in series; and there is one low-voltage coil or a plurality of low-voltage coils, where the plurality of low-voltage coils are connected in series.

In this application, one coil body and one low-voltage coil are disposed, so that an internal structure of the transformer can be simplified, to reduce a size of the transformer and expand an applicable scope of the transformer. A plurality of coil bodies are connected in series, and a plurality of low-voltage coils are connected in series, so that a quantity of output ends of the transformer can be increased, thereby improving working performance of the transformer and expanding an applicable scope of the transformer.

In a possible design, the high-voltage coil includes one coil body or a plurality of coil bodies connected to each other in parallel; and there is one low-voltage coil or a plurality of low-voltage coils, where the plurality of low-voltage coils are connected in parallel.

In this implementation, a plurality of coil bodies are connected in parallel, and a plurality of low-voltage coils are connected in parallel, so that diversity of an output voltage of the transformer can be improved, thereby improving working performance of the transformer and expanding an applicable scope of the transformer.

A second aspect of this application provides power equipment. The power equipment includes a transformer, and the transformer is the transformer in any one of the foregoing possible designs.

In this application, the transformer is disposed in the power equipment, to adjust an input voltage and/or an output voltage of the power equipment by using the transformer, thereby improving use performance of the power equipment and expanding an applicable scope of the power equipment.

It should be understood that the foregoing general descriptions and the following detailed descriptions are merely used as examples, and cannot limit this application.

### BRIEF DESCRIPTION OF DRAWINGS

FIG. 1 is a schematic diagram of a structure of a transformer in an implementation according to this application;
FIG. 2 is an exploded view of FIG. 1;
FIG. 3 is a schematic diagram of a structure of an insulation member in FIG. 2;
FIG. 4 is a cross-sectional view obtained after an insulation member and a high-voltage coil in FIG. 2 are assembled in an implementation; and
FIG. 5 is a cross-sectional view obtained after an insulation member and a high-voltage coil in FIG. 2 are assembled in another implementation.

### Reference signs:

1-Low-voltage coil;
   11-First installation hole;
2-High-voltage coil;
   21-Coil body;
   22-Cable outlet portion;
   23-Connection terminal;
   24-Voltage uniform layer;
3-Magnetic core;
4-Insulation member;
   41-Body portion;
   42-Extension portion;
   43-First end;
   44-Transition portion;
   45-Second installation hole;
5-Ground plane.

The accompanying drawings herein are incorporated into this specification and constitute a part of this specification, show implementations conforming to this application, and are used, together with this specification, to explain the principle of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

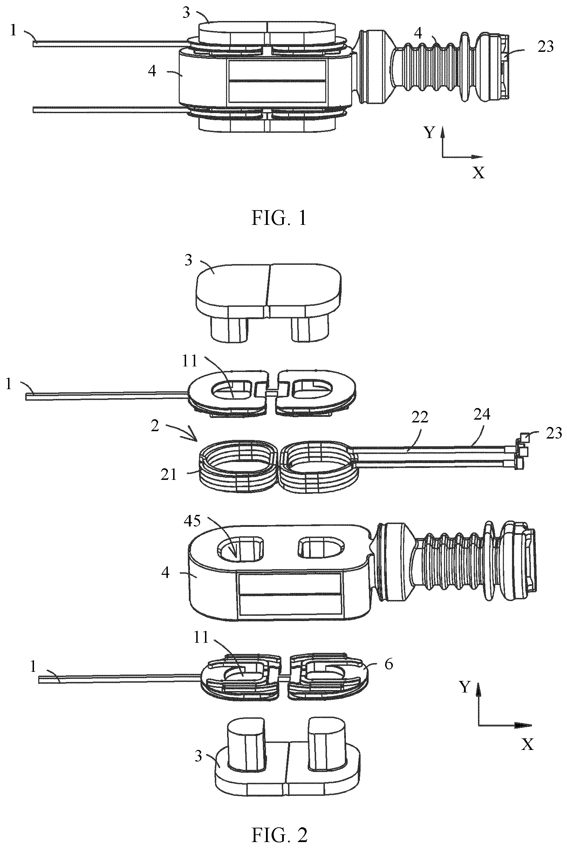

A first aspect of this application provides a transformer. As shown in FIG. 1 to FIG. 4, the transformer includes a low-voltage coil 1; a high-voltage coil 2; a magnetic core 3, where at least a part of the magnetic core 3 is penetrated through the low-voltage coil 1 and the high-voltage coil 2; and an insulation member 4, where the insulation member 4 is wrapped around the high-voltage coil 2 to insulate the high-voltage coil 2 from the low-voltage coil 1 and the magnetic core 3, and a ground plane 5 is disposed on at least a part of an outer surface of the insulation member 4. A voltage uniform layer 24 is disposed between the high-voltage coil 2 and the insulation member 4, the voltage uniform layer 24 is wrapped around the high-voltage coil 2, and the voltage uniform layer 24 is electrically connected to one end of the high-voltage coil 2.

In this implementation, when the transformer works, conversion between a high voltage and a low voltage is implemented by using the high-voltage coil 2, the low-voltage coil 1, and the magnetic core 3, to meet a use requirement of a user for a voltage. The insulation member 4 is disposed, so that a risk that the air is broken down and insulation between the high-voltage coil 2 and the low-voltage coil 1 fails because an electric field between the high-voltage coil 2 and the low-voltage coil 1 is so strong and exceeds an air tolerance upper limit can be reduced, thereby improving use safety of the transformer. In this implementation, the insulation member 4 is wrapped around only the high-voltage coil 2. Therefore, compared with wrapping the insulation member 4 around the high-voltage coil 2 and the low-voltage coil 1 in the conventional technology, heat dissipation of the low-voltage coil 1 and the magnetic core 3 can be facilitated while the high-voltage coil 2 is insulated from the low-voltage coil 1 and the magnetic core 3, to reduce a risk that the low-voltage coil 1 and the magnetic core 3 are damaged due to poor heat dissipation of the low-voltage coil 1 and the magnetic core 3, thereby prolonging service lives of the low-voltage coil 1 and the magnetic core 3 and further prolonging a service life of the transformer. In addition, because the insulation member 4 is wrapped around only the high-voltage coil 2, installation and maintenance of the low-voltage coil 1 and the magnetic core 3 can be facilitated, thereby reducing maintenance costs of the transformer; and materials required when the insulation member 4 is processed can be reduced, thereby reducing production costs of the insulation member 4 and further reducing production costs of the transformer.

The ground plane 5 is disposed on at least the part of the outer surface of the insulation member 4. When the transformer starts to work, the ground plane 5 is connected to a ground cable. In this case, an electric potential of the part that is of the outer surface of the insulation member 4, on which the ground plane is disposed, and that is in contact with the air is 0. Therefore, a voltage difference between the part that is of the outer surface of the insulation member 4 and on which the ground plane is disposed and the low-voltage coil 1, a voltage difference between the part that is of the outer surface of the insulation member 4 and on which the ground plane is disposed and the magnetic core 3, and electric field strength in the air are reduced. Finally, a risk that air between the high-voltage coil 2 and the low-voltage coil 1 and air between the high-voltage coil 2 and the magnetic core 3 are broken down is reduced, thereby further improving use safety of the transformer.

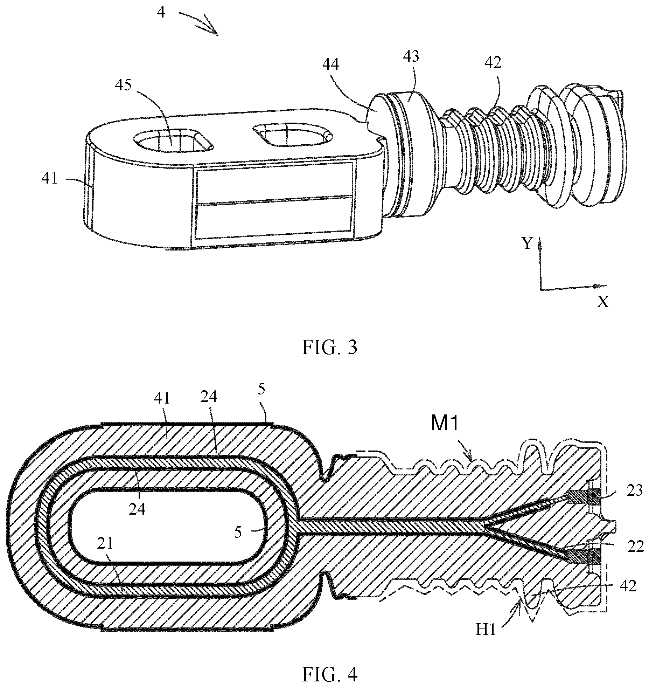

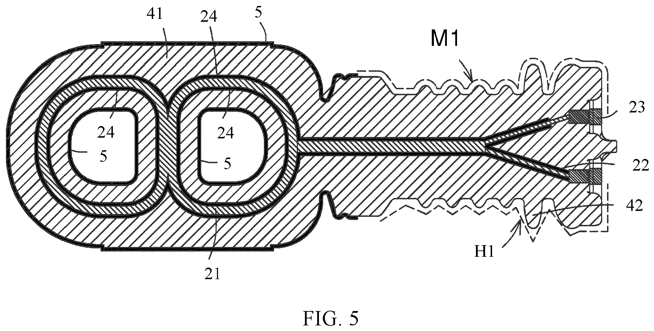

Because an outer surface of the high-voltage coil 2 is uneven, electric field strength generated when the high-voltage coil 2 works is uneven, increasing a risk that an air clearance on a contact surface between the high-voltage coil 2 and the insulation member 4 is broken down and a risk that an air clearance inside the insulation member 4 is broken down. Therefore, the voltage uniform layer 24 is disposed between the high-voltage coil 2 and the insulation member 4, and the voltage uniform layer 24 is electrically connected to one end of the high-voltage coil 2, to balance electric potentials on the surface of the high-voltage coil 2 by using the voltage uniform layer 24, so that a uniform and stable electric field is generated between the high-voltage coil 2, the ground plane 5 on the surface of the insulation member, the low-voltage coil 1, and the magnetic core 3, to reduce the risk that the air clearance on the contact surface between the high-voltage coil 2 and the insulation member 4 is broken down and a risk that an insulation material and air inside the insulation member 4 are broken down, thereby improving use safety of the transformer. In addition, a structure of the insulation member 4 wrapped around the high-voltage coil 2 is simplified, thereby reducing production costs of the insulation member 4. As shown in FIG. 4 and FIG. 5, the voltage uniform layer 24 is connected to one end of the high-voltage coil 2, and the voltage uniform layer 24 is disconnected from the other end of the high-voltage coil 2, so that a risk that the high-voltage coil 2 is short-circuited by the voltage uniform layer 24 because the voltage uniform layer 24 is connected to both the two ends of the high-voltage coil 2 can be reduced, thereby improving working stability and use safety of the transformer. A material of the voltage uniform layer 24 may be a conducting layer or a semi-conducting layer.

The transformer provided in this implementation may be applied to a scenario including an isolation transformer, such as a series resonance topology or a phase-shift full-bridge topology. An application scenario of the transformer is not specially limited in this implementation of this application.

Specifically, the insulation member 4 is wrapped around the high-voltage coil 2 through casting.

In this implementation, the insulation member 4 is wrapped around the high-voltage coil 2 through casting, so that a connection manner between the insulation member 4 and the high-voltage coil 2 can be simplified, to simplify structures of the high-voltage coil 2 and the insulation member 4, and reduce a quantity of parts required when the high-voltage coil 2 is connected to the insulation member 4, thereby reducing production costs of the high-voltage coil 2 and the insulation member 4. In addition, the insulation member 4 is wrapped around the high-voltage coil 2 through casting, so that connection stability between the high-voltage coil 2 and the insulation member 4 can be improved, to reduce a risk that the high-voltage coil 2 moves relative to the insulator, thereby improving working stability and use safety of the transformer.

The insulation member 4 may be generated through casting or die casting, to reduce a risk that an air cavity exists inside the insulation member 4, thereby improving quality of the insulation member 4. The insulation member 4 may be epoxy resin, insulation rubber, or the like. A material of the insulation member 4 is not specially limited in this implementation of this application.

Specifically, as shown in FIG. 3, the high-voltage coil 2 includes a coil body 21, a cable outlet portion 22, and a connection terminal 23. One end of the cable outlet portion 22 is connected to the coil body 21, and the other end is connected to the connection terminal 23. The insulation member 4 is wrapped around the coil body 21, the cable outlet portion 22, and a part of the connection terminal 23, and at least a part of the connection terminal 23 is exposed.

In this implementation, the connection terminal 23 is connected to a high-voltage power supply or a high-voltage electric potential to form a high-voltage end, and the ground plane 5 of the insulation member 4 is connected to the ground cable to form a low-voltage end. In a use process of the transformer, a current passes through the high-voltage coil 2, the cable outlet portion 22, and the connection terminal 23. As shown in FIG. 4 and FIG. 5, along the outer surface of the insulation member 4, a creepage distance M1 exists between an end that is of the ground plane 5 and that is close to the connection terminal 23 and the connection terminal 23, and an electrical clearance H1 exists between the end that is of the ground plane 5 and that is close to the connection terminal 23 and the connection terminal 23. If the creepage distance M1 is too small and the electrical clearance H1 is too small, there is a risk that external air or an insulation material between the high-voltage end and the low-voltage end is prone to be broken down, and consequently a safety problem is caused. The insulation member 4 is wrapped around the coil body 21 and the cable outlet portion 22 and wrapped around the part of the connection terminal 23, so that the creepage distance M1 and the electrical clearance H1 can be increased, to reduce a risk that the external air or the insulation material between the high-voltage end and the low-voltage end is broken down because the creepage distance M1 and the electrical clearance H1 are too small, thereby further improving use safety of the transformer.

More specifically, as shown in FIG. 1 to FIG. 4, a creepage distance M2 exists between an end that is of the low-voltage coil 1 and that is close to the connection terminal 23 and the connection terminal 23, an electrical clearance H2 exists between the end that is of the low-voltage coil 1 and that is close to the connection terminal 23 and the connection terminal 23, M2>M1, and H2>H1. A creepage distance M3 exists between an end that is of the magnetic core 3 and that is close to the connection terminal 23 and the connection terminal 23, an electrical clearance H3 exists between the end that is of the magnetic core 3 and that is close to the connection terminal 23 and the connection terminal 23, M3>M1, and H3>H1.

In this implementation, a shortest path that is between the low-voltage coil 1 and the connection terminal 23 and that is measured along the surface of the insulation member 4 is the creepage distance M2, and a shortest path that is between the magnetic core 3 and the connection terminal 23 and that is measured along the surface of the insulation member 4 is the creepage distance M3. A shortest path that is between the ground plane 5 and the connection terminal 23 and that is measured along the air is the electrical clearance H1, a shortest path that is between the low-voltage coil 1 and the connection terminal 23 and that is measured along the air is the electrical clearance H2, and a shortest path that is between the magnetic core 3 and the connection terminal 23 and that is measured along the air is the electrical clearance H3.

In this implementation, in a length direction X of the high-voltage coil 2, if a distance between the end that is of the ground plane 5 and that is close to the connection terminal 23 and the connection terminal 23 is less than a distance between the end that is of the low-voltage coil 1 and that is close to the connection terminal 23 and the connection terminal 23, and a distance between the end that is of the ground plane 5 and that is close to the connection terminal 23 and the connection terminal 23 is less than a distance between the end that is of the magnetic core 3 and that is close to the connection terminal 23 and the connection terminal 23, electric fields generated by excess parts of the low-voltage coil 1 and the magnetic core 3 relative to the ground plane 5 directly enter the air, and consequently there is a risk that the air is prone to be broken down by a strong electric field. Therefore, M2>M1, and M3>M1, that is, in the length direction X of the high-voltage coil 2, the distance between the end that is of the low-voltage coil 1 and that is close to the connection terminal 23 and the connection terminal 23 is less than the distance between the end that is of the ground plane 5 and that is close to the connection terminal 23 and the connection terminal 23, and the distance between the end that is of the magnetic core 3 and that is close to the connection terminal 23 and the connection terminal 23 is less than the distance between the end that is of the ground plane 5 and that is close to the connection terminal 23 and the connection terminal 23, so that a length of the ground plane 5 is greater than a length of the low-voltage coil 1 and a length of the magnetic core 3. Therefore, a risk that the air is broken down can be reduced, thereby improving use safety of the transformer and prolonging a service life of the transformer. H2>H1, and H3>H1, that is, in a thickness direction Y of the high-voltage coil 2, a distance between the low-voltage coil 1 and the connection terminal 23 is less than a distance between the ground plane 5 and the connection terminal 23, and a distance between the magnetic core 3 and the connection terminal 23 is less than the distance between the ground plane 5 and the connection terminal 23, so that installation of the high-voltage coil 2, the low-voltage coil 1, and the magnetic core 3 can be facilitated, to simplify a structure of the transformer, thereby reducing production costs of the transformer.

Specifically, as shown in FIG. 3 and FIG. 4, the insulation member 4 includes a body portion 41 and an extension portion 42. The body portion 41 is wrapped around the coil body 21, and the extension portion 42 is wrapped around the cable outlet portion 22 and the part of the connection terminal 23. The extension portion 42 has a first end 43 connected to the body portion 41, and a thickness of the first end 43 is greater than a thickness of the body portion 41.

In this implementation, because of an electric field end effect, electric field strength at an end of the high-voltage coil 2 and an end of the low-voltage coil 1 is the highest. Therefore, the thickness of the first end 43 of the insulation member 4 is greater than the thickness of the body portion 41, so that a risk that air outside the first end 43 is broken down by an electric field can be reduced, thereby improving use safety of the transformer. Electric field strength of a place away from the end of the high-voltage coil 2 and the end of the low-voltage coil 1 gradually decreases. Therefore, a thickness of an end that is of the extension portion 42 and that is away from the body portion 41 may be less than the thickness of the first end 43, to reduce materials of the insulation member 4, thereby reducing costs.

In addition, to improve use safety of the transformer, the creepage distance M1 and the electrical clearance H1 between the end that is of the ground plane 5 and that is close to the connection terminal 23 and the connection terminal 23 need to meet safety distance requirements specified in a standard. Therefore, the extension portion 42 is relatively long or at least a part of the extension portion 42 is a wavy structure, so that an area of an outer surface of the extension portion 42 can be increased, to increase the creepage distance M1 and the electrical clearance H1 between the end that is of the ground plane 5 and that is close to the connection terminal 23 and the connection terminal 23. In this implementation, at least the part of the extension portion 42 is the wavy structure, so that a size of the insulation member 4 can be reduced while it is ensured that the creepage distance M1 meets a safe distance requirement specified in the standard, and a size of the transformer can be reduced while production costs of the insulation member 4 are reduced, thereby reducing production costs of the transformer and expanding an applicable scope of the transformer. In addition, at least the part of the extension portion 42 is the wavy structure, so that a contact area between the insulation member 4 and the air is increased, thereby improving heat dissipation efficiency of the high-voltage coil 2 and working stability of the high-voltage coil 2.

Specifically, as shown in FIG. 3, the body portion 41 is connected to the extension portion 42 by using a transition portion 44. The transition portion 44 is arc-shaped, and a cross-sectional area of the transition portion 44 increases in a direction from the body portion 41 to the extension portion 42. The ground plane 5 is wrapped around the transition portion 44.

In this implementation, because there is a non-uniform tip electric field line between ends of the high-voltage coil 2, the low-voltage coil 1, and the ground plane 5, the ends are designed to be arc-shaped, so that impact of a tip electric field can be well buffered. Therefore, the body portion 41 is connected to the extension portion 42 by using the arc-shaped transition portion 44, so that electric field strength of the insulation material of the insulation member 4 can be effectively reduced while a risk that the air is broken down by an end electric field is reduced, thereby improving insulation reliability and increasing a service life of the material. In addition, a size of the insulation member 4 can be reduced, to reduce production costs of the insulation member 4 and space that is of the transformer and that is occupied by the insulation member 4, thereby reducing a size of the transformer and expanding an applicable scope of the transformer. The ground plane 5 is wrapped around an outer surface of the transition portion 44, so that a risk that air outside the transition portion 44 is broken down by an electric field can be reduced, thereby further improving use safety of the transformer.

In any one of the foregoing implementations, as shown in FIG. 2 and FIG. 3, a first installation hole 11 is disposed in the low-voltage coil 1, a second installation hole 45 is disposed in the insulation member 4, and at least the part of the magnetic core 3 is penetrated through the first installation hole 11 and the second installation hole 45 and penetrated through the high-voltage coil 2.

In this implementation, at least the part of the magnetic core 3 is penetrated through the first installation hole 11 and the second installation hole 45 and penetrated through the high-voltage coil 2, so that the magnetic core 3 can be penetrated through both the low-voltage coil 1 and the high-voltage coil 2, to reduce a risk that the transformer cannot normally work because the magnetic core 3 is not penetrated through the low-voltage coil 1 and/or the high-voltage coil 2, thereby improving working stability and reliability of the transformer. In addition, at least the part of the magnetic core 3 is penetrated through the first installation hole 11 and the second installation hole 45, so that installation of the magnetic core 3 can be facilitated, to simplify an installation structure of the magnetic core 3 and reduce a quantity of parts required when the magnetic core 3 is installed, thereby reducing a size of the transformer and production costs of the transformer and also expanding an applicable scope of the transformer.

In an implementation, as shown in FIG. 4 and FIG. 5, the high-voltage coil 2 includes one coil body 21 or a plurality of coil bodies 21 connected to each other in series; and there is one low-voltage coil 1 or a plurality of low-voltage coils 1, where the plurality of low-voltage coils 1 are connected in series.

In this implementation, as shown in FIG. 4, the high-voltage coil 2 includes one coil body 21, so that a structure of the high-voltage coil 2 can be simplified, to reduce internal space that is of the transformer and that is occupied by the high-voltage coil 2, thereby reducing a size of the transformer and expanding an applicable scope of the transformer. As shown in FIG. 5, a plurality of coil bodies 21 are connected in series, and a plurality of low-voltage coils 1 are connected in series, so that a quantity of output ends of the transformer can be increased, thereby improving working performance of the transformer and expanding an applicable scope of the transformer. If adjacent magnetic cores 3 are insulated from each other, to ensure that a plurality of coil bodies 21 are connected in series and a plurality of low-voltage coils 1 are connected in series, winding manners of the coil body 21 and the low-voltage coil 1 are relatively complex. Therefore, a plurality of magnetic cores 3 are disposed, and adjacent magnetic cores 3 are connected, so that winding manners of the high-voltage coil 2 and the low-voltage coil 1 can be simplified, to facilitate installation, detachment, and maintenance of the high-voltage coil 2 and the low-voltage coil 1, thereby reducing maintenance costs of the transformer.

The plurality of magnetic cores 3 may be integrally formed, or may be connected through fastening, to facilitate connection between adjacent magnetic cores 3.

In addition, the plurality of coil bodies 21 connected in series may be formed through winding by using one high-voltage coil 2, or may be formed by using a plurality of high-voltage coils 2. In this application, the coil bodies 21 are formed through winding by using one high-voltage coil 2, so that a connection manner between adjacent coil bodies 21 can be simplified.

In another implementation, as shown in FIG. 4 and FIG. 5, the high-voltage coil 2 includes one coil body 21 or a plurality of coil bodies 21 connected to each other in parallel; and there is one low-voltage coil 1 or a plurality of low-voltage coils 1, where the plurality of low-voltage coils 1 are connected in parallel.

In this implementation, a plurality of coil bodies 21 are connected in parallel, and a plurality of low-voltage coils 1 are connected in parallel, so that diversity of an output voltage of the transformer can be improved, thereby improving working performance of the transformer and expanding an applicable scope of the transformer. A plurality of magnetic cores 3 are disposed, and adjacent magnetic cores 3 are insulated from each other, so that impact between adjacent coil bodies 21 and impact between adjacent low-voltage coils 1 can be reduced, to improve working stability of the high-voltage coil 2 and the low-voltage coil 1, thereby improving working stability of the transformer.

A second aspect of the implementations provides power equipment. The power equipment includes a transformer, and the transformer is the transformer in any one of the foregoing implementations.

In this implementation, the transformer is disposed in the power equipment, to adjust an input voltage and/or an output voltage of the power equipment by using the transformer, thereby improving use performance of the power equipment and expanding an applicable scope of the power equipment. The power equipment may be a medium-voltage frequency converter, a power electronic transformer, a direct current micro grid, or the like. A specific type of the power equipment is not specially limited in this implementation of this application.

It should be noted that a part of this patent application document includes content protected by copyright. The copyright owner retains the copyright except for making a copy of content of a patent document of the China National Intellectual Property Administration or a recorded patent file.

The scope of protection is defined by the appended claims.

## Claims

1. A transformer, wherein the transformer comprises:
a low-voltage coil (1);
a high-voltage coil (2);
a magnetic core (3), wherein at least a part of the magnetic core (3) is penetrated through the low-voltage coil (1) and the high-voltage coil (2); and
an insulation member (4), wherein the insulation member (4) is wrapped around the high-voltage coil (2), to insulate the high-voltage coil (2) from the low-voltage coil (1) and the magnetic core (3), and a ground plane (5) is disposed on at least a part of an outer surface of the insulation member (4); and
a voltage uniform layer (24) is disposed between the high-voltage coil (2) and the insulation member (4), the voltage uniform layer (24) is wrapped around the high-voltage coil (2), and the voltage uniform layer (24) is electrically connected to one end of the high-voltage coil (2), wherein the voltage uniform layer is a conducting or semi-conducting layer that has the function of balancing electric potentials on a surface of the high-voltage coil (2);
wherein the high-voltage coil (2) comprises a coil body (21), a cable outlet portion (22), and a connection terminal (23), one end of the cable outlet portion (22) is connected to the coil body (21), and the other end is connected to the connection terminal (23); and
the insulation member (4) is wrapped around the coil body (21), the cable outlet portion (22), and a part of the connection terminal (23), and at least a part of the connection terminal (23) is exposed;
wherein the insulation member (4) comprises a body portion (41) and an extension portion (42), the body portion (41) is wrapped around the coil body (21), and the extension portion (42) is wrapped around the cable outlet portion (22) and the part of the connection terminal (23); and
the extension portion (42) has a first end (43) connected to the body portion (41), and a thickness of the first end (43) is greater than a thickness of the body portion (41).

2. The transformer according to claim 1, wherein the insulation member (4) is wrapped around the high-voltage coil (2) through casting.

3. The transformer according to claim 1 or 2, wherein a creepage distance M1 exists between an end that is of the ground plane (5) and that is close to the connection terminal (23) and the connection terminal (23), and an electrical clearance H1 exists between the end that is of the ground plane (5) and that is close to the connection terminal (23) and the connection terminal (23);
a creepage distance M2 exists between an end that is of the low-voltage coil (1) and that is close to the connection terminal (23) and the connection terminal (23), an electrical clearance H2 exists between the end that is of the low-voltage coil (1) and that is close to the connection terminal (23) and the connection terminal (23), M2>M1, and H2>H1; and
a creepage distance M3 exists between an end that is of the magnetic core (3) and that is close to the connection terminal (23) and the connection terminal (23), an electrical clearance H3 exists between the end that is of the magnetic core (3) and that is close to the connection terminal (23) and the connection terminal (23), M3>M1, and H3>H1;
wherein:
a shortest path that is between the ground plane (5) and the connection terminal (23) and that is measured along the surface of the insulation member (4) is the creepage distance M1, a shortest path that is between the low-voltage coil (1) and the connection terminal (23) and that is measured along the surface of the insulation member (4) is the creepage distance M2, and a shortest path that is between the magnetic core (3) and the connection terminal (23) and that is measured along the surface of the insulation member (4) is the creepage distance M3; and
a shortest path that is between the ground plane (5) and the connection terminal (23) and that is measured along the air is the electrical clearance H1, a shortest path that is between the low-voltage coil (1) and the connection terminal (23) and that is measured along the air is the electrical clearance H2, and a shortest path that is between the magnetic core (5) and the connection terminal (23) and that is measured along the air is the electrical clearance H3.

4. The transformer according to claim 1 to 3, wherein the body portion (41) is connected to the extension portion (42) by using a transition portion (44), the transition portion (44) is arc-shaped, and a cross-sectional area of the transition portion (44) increases in a direction from the body portion (41) to the extension portion (42); and
the ground plane (5) is wrapped around the transition portion (44).

5. The transformer according to any one of claims 1 to 4, wherein a first installation hole (11) is disposed in the low-voltage coil (1), a second installation hole (45) is disposed in the insulation member (4), and at least a part of the magnetic core (3) is penetrated through the first installation hole (11) and the second installation hole (45) and penetrated through the high-voltage coil (2).

6. The transformer according to any one of claims 1 to 5, wherein the high-voltage coil (2) comprises one coil body (21) or a plurality of coil bodies (21) connected to each other in series; and
there is one low-voltage coil (1) or a plurality of low-voltage coils (1), wherein the plurality of low-voltage coils (1) are connected in series.

7. The transformer according to any one of claims 1 to 5, wherein the high-voltage coil (2) comprises one coil body (21) or a plurality of coil bodies (21) connected to each other in parallel; and
there is one low-voltage coil (1) or a plurality of low-voltage coils (1), wherein the plurality of low-voltage coils (1) are connected in parallel.

8. Power equipment, wherein the power equipment comprises a transformer, and the transformer is the transformer according to any one of claims 1 to 7.

## Patentansprüche

1. Transformator, wobei der Transformator Folgendes umfasst:
eine Niederspannungsspule (1);
eine Hochspannungsspule (2);
einen Magnetkern (3), wobei zumindest ein Teil des Magnetkerns (3) durch die Niederspannungsspule (1) und die Hochspannungsspule (2) durchdrungen ist; und
ein Isolierelement (4), wobei das Isolierelement (4) um die Hochspannungsspule (2) gewickelt ist, um die Hochspannungsspule (2) von der Niederspannungsspule (1) und dem Magnetkern (3) zu isolieren, und eine Masseebene (5) auf zumindest einem Teil einer Außenfläche des Isolierelements (4) angeordnet ist; und
eine gleichmäßige Spannungsschicht (24) zwischen der Hochspannungsspule (2) und dem Isolierelement (4) angeordnet ist, die gleichmäßige Spannungsschicht (24) um die Hochspannungsspule (2) gewickelt ist und die gleichmäßige Spannungsschicht (24) elektrisch mit einem Ende der Hochspannungsspule (2) verbunden ist, wobei die gleichmäßige Spannungsschicht eine leitende oder halbleitende Schicht ist, welche die Funktion aufweist, elektrische Potenziale auf einer Oberfläche der Hochspannungsspule (2) auszugleichen;
wobei die Hochspannungsspule (2) einen Spulenkörper (21), einen Kabelausgangsabschnitt (22) und eine Anschlussklemme (23) umfasst, wobei ein Ende des Kabelausgangsabschnitts (22) mit dem Spulenkörper (21) verbunden ist und das andere Ende mit der Anschlussklemme (23) verbunden ist; und
das Isolierelement (4) um den Spulenkörper (21), den Kabelauslassabschnitt (22) und einen Teil der Anschlussklemme (23) gewickelt ist und zumindest ein Teil der Anschlussklemme (23) freiliegt;
wobei das Isolierelement (4) einen Körperabschnitt (41) und einen Verlängerungsabschnitt (42) umfasst, der Körperabschnitt (41) um den Spulenkörper (21) gewickelt ist und der Verlängerungsabschnitt (42) um den Kabelauslassabschnitt (22) und den Teil der Anschlussklemme (23) gewickelt ist; und
der Verlängerungsabschnitt (42) ein erstes Ende (43) aufweist, das mit dem Körperabschnitt (41) verbunden ist, und eine Dicke des ersten Endes (43) größer als eine Dicke des Körperabschnitts (41) ist.

2. Transformator nach Anspruch 1, wobei das Isolierelement (4) durch Gießen um die Hochspannungsspule (2) gewickelt ist.

3. Transformator nach Anspruch 1 oder 2, wobei eine Kriechstrecke M1 zwischen einem Ende, das zu der Masseebene (5) gehört und das sich in der Nähe der Anschlussklemme (23) befindet, und der Anschlussklemme (23) besteht und ein elektrischer Abstand H1 zwischen dem Ende, das zu der Masseebene (5) gehört und das sich in der Nähe der Anschlussklemme (23) befindet, und der Anschlussklemme (23) besteht;
eine Kriechstrecke M2 zwischen einem Ende, das zu der Niederspannungsspule (1) gehört und das sich in der Nähe der Anschlussklemme (23) befindet, und der Anschlussklemme (23) besteht, ein elektrischer Abstand H2 zwischen dem Ende, das zu der Niederspannungsspule (1) gehört und das sich in der Nähe der Anschlussklemme (23) befindet, und der Anschlussklemme (23) besteht, M2 > M1 und H2 > H1; und
eine Kriechstrecke M3 zwischen einem Ende, das zu dem Magnetkern (3) gehört und das sich in der Nähe der Anschlussklemme (23) befindet, und der Anschlussklemme (23) besteht, ein elektrischer Abstand H3 zwischen dem Ende, das zu dem Magnetkern (3) gehört und das sich in der Nähe der Anschlussklemme (23) befindet, und der Anschlussklemme (23) besteht, M3 > M1 und H3 > H1;
wobei:
ein kürzester Weg, der zwischen der Masseebene (5) und der Anschlussklemme (23) vorliegt und der entlang der Oberfläche des Isolierelements (4) gemessen wird, die Kriechstrecke M1 ist, ein kürzester Weg, der zwischen der Niederspannungsspule (1) und der Anschlussklemme (23) vorliegt und der entlang der Oberfläche des Isolierelements (4) gemessen wird, die Kriechstrecke M2 ist, und ein kürzester Weg, der zwischen dem Magnetkern (3) und der Anschlussklemme (23) vorliegt und der entlang der Oberfläche des Isolierelements (4) gemessen wird, die Kriechstrecke M3 ist; und
ein kürzester Weg, der zwischen der Masseebene (5) und der Anschlussklemme (23) vorliegt und der entlang der Luft gemessen wird, der elektrische Abstand H1 ist, ein kürzester Weg, der zwischen der Niederspannungsspule (1) und der Anschlussklemme (23) vorliegt und der entlang der Luft gemessen wird, der elektrische Abstand H2 ist, und ein kürzester Weg, der zwischen dem Magnetkern (5) und der Anschlussklemme (23) vorliegt und der entlang der Luft gemessen wird, der elektrische Abstand H3 ist.

4. Transformator nach Anspruch 1 bis 3, wobei der Körperabschnitt (41) mit dem Verlängerungsabschnitt (42) unter Verwendung eines Übergangsabschnitts (44) verbunden ist, der Übergangsabschnitt (44) bogenförmig ist und eine Querschnittsfläche des Übergangsabschnitts (44) in einer Richtung von dem Körperabschnitt (41) zu dem Verlängerungsabschnitt (42) zunimmt; und
die Masseebene (5) um den Übergangsabschnitt (44) gewickelt ist.

5. Transformator nach einem der Ansprüche 1 bis 4, wobei ein erstes Installationsloch (11) in der Niederspannungsspule (1) angeordnet ist, ein zweites Installationsloch (45) in dem Isolierelement (4) angeordnet ist und zumindest ein Teil des Magnetkerns (3) durch das erste Installationsloch (11) und das zweite Installationsloch (45) durchdrungen ist und die Hochspannungsspule (2) durchdringt.

6. Transformator nach einem der Ansprüche 1 bis 5, wobei die Hochspannungsspule (2) einen Spulenkörper (21) oder eine Vielzahl von Spulenkörpern (21), die miteinander in Reihe geschaltet ist, umfasst; und
eine Niederspannungsspule (1) oder eine Vielzahl von Niederspannungsspulen (1) vorhanden ist, wobei die Vielzahl von Niederspannungsspulen (1) in Reihe geschaltet ist.

7. Transformator nach einem der Ansprüche 1 bis 5, wobei die Hochspannungsspule (2) einen Spulenkörper (21) oder eine Vielzahl von Spulenkörpern (21), die miteinander parallel geschaltet ist, umfasst; und
eine Niederspannungsspule (1) oder eine Vielzahl von Niederspannungsspulen (1) vorhanden ist, wobei die Vielzahl von Niederspannungsspulen (1) parallel geschaltet ist.

8. Leistungsausrüstung, wobei die Leistungsausrüstung einen Transformator umfasst und der Transformator der Transformator nach einem der Ansprüche 1 bis 7 ist.

## Revendications

1. Transformateur, dans lequel le transformateur comprend :
une bobine basse tension (1) ;
une bobine haute tension (2) ;
un noyau magnétique (3), dans lequel au moins une partie du noyau magnétique (3) est pénétrée à travers la bobine basse tension (1) et la bobine haute tension (2) ; et
un élément isolant (4), dans lequel l'élément isolant (4) est enroulé autour de la bobine haute tension (2), pour isoler la bobine haute tension (2) de la bobine basse tension (1) et du noyau magnétique (3), et un plan de masse (5) est disposé sur au moins une partie d'une surface extérieure de l'élément isolant (4) ; et
une couche uniforme de tension (24) est disposée entre la bobine haute tension (2) et l'élément isolant (4), la couche uniforme de tension (24) est enroulée autour de la bobine haute tension (2), et la couche uniforme de tension (24) est connectée électriquement à une extrémité de la bobine haute tension (2), dans lequel la couche uniforme de tension est une couche conductrice ou semi-conductrice qui a pour fonction d'équilibrer les potentiels électriques sur une surface de la bobine haute tension (2) ;
dans lequel la bobine haute tension (2) comprend un corps de bobine (21), une partie de sortie de câble (22) et une borne de connexion (23), une extrémité de la partie de sortie de câble (22) est connectée au corps de bobine (21), et l'autre extrémité est connectée à la borne de connexion (23) ; et
l'élément isolant (4) est enroulé autour du corps de bobine (21), de la partie de sortie de câble (22), et d'une partie de la borne de connexion (23), et au moins une partie de la borne de connexion (23) est exposée ;
dans lequel l'élément isolant (4) comprend une partie de corps (41) et une partie d'extension (42), la partie de corps (41) est enroulée autour du corps de bobine (21), et la partie d'extension (42) est enroulée autour de la partie de sortie de câble (22) et de la partie de la borne de connexion (23) ; et
la partie d'extension (42) a une première extrémité (43) reliée à la partie de corps (41), et une épaisseur de la première extrémité (43) est supérieure à une épaisseur de la partie de corps (41).

2. Transformateur selon la revendication 1, dans lequel l'élément isolant (4) est enroulé autour de la bobine haute tension (2) par moulage.

3. Transformateur selon la revendication 1 ou 2, dans lequel une ligne de fuite M1 existe entre une extrémité, qui est celle du plan de masse (5) et qui est proche de la borne de connexion (23), et la borne de connexion (23), et une distance de séparation électrique H1 existe entre l'extrémité, qui est celle du plan de masse (5) et qui est proche de la borne de connexion (23), et la borne de connexion (23) ;
une ligne de fuite M2 existe entre une extrémité, qui est celle de la bobine basse tension (1) et qui proche de la borne de connexion (23), et la borne de connexion (23), une distance de séparation électrique H2 existe entre l'extrémité, qui est celle de la bobine basse tension (1) et qui est proche de la borne de connexion (23), et la borne de connexion (23), M2>M1 et H2>H1 ; et
une ligne de fuite M3 existe entre une extrémité, qui est celle du noyau magnétique (3) et qui est proche de la borne de connexion (23), et la borne de connexion (23), une distance de séparation électrique H3 existe entre l'extrémité, qui est celle du noyau magnétique (3) et qui est proche de la borne de connexion (23), et la borne de connexion (23), M3>M1 et H3>H1 ; dans lequel :
un chemin le plus court qui est entre le plan de masse (5) et la borne de connexion (23) et qui est mesuré dans la surface de l'élément isolant (4) est la ligne de fuite M1, un chemin le plus court qui est entre la bobine basse tension (1) et la borne de connexion (23) et qui est mesuré dans la surface de l'élément isolant (4) est la ligne de fuite M2, et un chemin le plus court qui est entre le noyau magnétique (3) et la borne de connexion (23) et qui est mesuré dans la surface de l'élément isolant (4) est la ligne de fuite M3 ; et
un chemin le plus court qui est entre le plan de masse (5) et la borne de connexion (23) et qui est mesuré dans l'air est la distance de séparation électrique H1, un chemin le plus court qui est entre la bobine basse tension (1) et la borne de connexion (23) et qui est mesuré dans l'air est la distance de séparation électrique H2, et un chemin le plus court qui est entre le noyau magnétique (5) et la borne de connexion (23) et qui est mesuré dans l'air est la distance de séparation électrique H3.

4. Transformateur selon les revendications 1 à 3, dans lequel la partie de corps (41) est reliée à la partie d'extension (42) à l'aide d'une partie de transition (44), la partie de transition (44) est en forme d'arc, et une section transversale de la partie de transition (44) augmente dans une direction de la partie de corps (41) vers la portion d'extension (42) ; et
le plan de masse (5) est enroulé autour de la partie de transition (44).

5. Transformateur selon l'une quelconque des revendications 1 à 4, dans lequel un premier trou d'installation (11) est disposé dans la bobine basse tension (1), un second trou d'installation (45) est disposé dans l'élément d'isolation (4), et au moins une partie du noyau magnétique (3) est pénétrée à travers le premier trou d'installation (11) et le second trou d'installation (45) et pénétrée à travers la bobine haute tension (2).

6. Transformateur selon l'une quelconque des revendications 1 **à 5,** dans lequel la bobine haute tension (2) comprend un corps de bobine (21) ou une pluralité de corps de bobine (21) connectés les uns aux autres en série ; et
il existe une bobine basse tension (1) ou une pluralité de bobines basse tension (1), dans lequel la pluralité de bobines basse tension (1) sont connectées en série.

7. Transformateur selon l'une quelconque des revendications 1 **à 5,** dans lequel la bobine haute tension (2) comprend un corps de bobine (21) ou une pluralité de corps de bobine (21) connectés les uns aux autres en parallèle ; et
il existe une bobine basse tension (1) ou une pluralité de bobines basse tension (1), dans lequel la pluralité de bobines basse tension (1) sont connectées en parallèle.

8. Équipement de puissance, dans lequel l'équipement de puissance comprend un transformateur, et le transformateur est le transformateur selon l'une quelconque des revendications 1 **à** 7.
